# EUROPEAN PATENT APPLICATION

(11) **EP 1 586 437 A1**
(43) Date of publication of application: **19.10.2005**
(21) Application number: 04013620.2
(22) Date of filing: 09.06.2004
(51) Int. Cl.: B29C 69/02, B30B 9/32, B29C 55/22, B29C 49/00, B65D 21/08, B65D 1/02

(54) **Longitudinally expandable plastic bottle, and method and apparatus for manufacturing the same**

(30) Priority: 14.04.2004 JP 2004118550
(71) Applicant: Gohsho Company, Ltd., Nakakoma-gun, Yamanashi (JP)
(72) Inventor: Higuchi, Mitsuo, Nakakoma-gun Yamanashi (JP)
(74) Representative: Kirschner, Klaus Dieter

(57) **Abstract**

There is proposed a method for easily manufacturing a plastic bottle the longitudinal dimension (height) of which is decreased substantially when the bottle is manufactured, as compared with the time when the bottle is filled with contents. The method includes a step of molding of the bottle (1a) constructed so that a longitudinal part or the whole of the bottle, except a mouth portion at the upper end, has a bellows shape in the horizontal direction; a step of compression molding (1c) of the bottle so that the molded bottle is compressed in the longitudinal direction and the compressed state is kept at ordinary temperature; and a step of expanding (1h) of the bottle so that the bottle is expanded from the compressed state so as to have almost the same height (volume) as the original height.

## Description

The present invention relates to a distribution system for transporting a vessel containing juice or mineral water, which is formed by mainly using a blow molding process called stretch blow or injection blow or generally called PET resin blow, especially from a manufacturing process to a recycling plant for throw-away, recycling, or the like.

In recent years, the volume of production of synthetic resin bottles has become enormous.

A serous drawback of the synthetic resin bottle is that when juice or mineral water in the bottle is drunk up and the bottle is thrown away, the bottle remains in the original shape, and when the emptied bottle is thrown away in a trash container, the trash container is filled soon with bottles because the state is as if air is thrown away in the trash container, and eventually bottles are thrown away on the road, which harms the living environment. In addition, the recovery costs for emptied bottles and the labor costs for cleaning put a heavy burden on public utilities.

Also, although these synthetic resin bottles can be manufactured by easy means such as blow forming, the strength thereof is not enough for transportation on a motor vehicle or other transportation means accompanied by heavy vibrations and for piled-up display in a store.

Furthermore, when the bottles are transported from a bottle manufacturer to a company which fills the bottles with juice or mineral water, the bottles take a lot of space, and the state is as if air is transported. Therefore, the ratio of transportation costs to production costs is considerably high.

In the above situation, the inventor has proposed a liquid vessel that is devised so as to be capable of being contracted easily when an emptied liquid vessel is recovered.

This liquid vessel is made of a relatively soft synthetic resin, and the peripheral wall of the liquid vessel having a mouth on the top thereof is formed into a pleated shape, see Japanese Patent Laid Open Letter No. 2001-213418.

Also, the inventor has additionally proposed an invention of a plastic bottle that has a shape such that the volume thereof can be decreased substantially by applying a load to the bottle in the vertical direction and/or the torsional direction, and means for keeping the contracted shape, see Japanese Patent Laid Open Letter No. 2002-068156.

According to the proposed inventions, when the plastic bottle is collapsed, the height of bottle can be decreased and the contracted state can be kept.

Although the means for manufacturing a pleatedly shaped vessel of this type has been proposed, no proposals have been made regarding a system for transporting the vessels from a manufacturing process therefor to a plant for throw-away or recycling.

Generally, an object of the present invention is to provide a system in which a series of processes for storing and transporting large quantities of plastic bottles using a pleatedly shaped vessel at one time from a manufacturing process to a charging plant and for treating emptied bottles in large quantities at one time are performed exactly and surely and moreover easily and smoothly.

This object is achieved by the method, apparatus and bottle according to the independent claims. Preferred embodiments are characterized in the sub-claims.

It is an advantage of the present invention that it is easy to manufacture a plastic bottle the longitudinal dimension (height) of which is decreased substantially when the bottle is manufactured, as compared with the time when the bottle is filled with contents, in the above-described consecutive system. It is also advantageous that the compressed plastic bottle may be kept in the compressed state at ordinary temperature. It is also advantageous that the compressed plastic bottle may be transported in a compressed (collapsed) state from a manufacturing process for a plastic bottle to, for example, a plant where the bottle is filled with contents.

Furthermore, it is advantageous that a plastic bottle is provided the volume of which is again increased to the original volume by applying an internal pressure etc. in the charging plant.

Furthermore, it is advantageous that a plastic bottle having been filled with contents can be transported to a retail store in the filled state, and to enable the bottle height corresponding to an emptied portion to be decreased to decrease the bottle volume during the time when a purchaser of the commodity is drinking the contents or after he/she has drunken up the contents.

Sill another advantage is that a plastic bottle emptied by drinking up can be contracted to a volume (height) of 1/2 to 1/10 of the original volume, and to thereby enable the quantity of treatment accomplished at one time to be increased significantly as compared with the conventional bottle when the emptied bottle is contained in a trash container and when the emptied bottle is transported for throw-away or recycling.

It is an advantage of the process from the manufacture of the bottle for containing mineral water or juices to the throw-away of the bottle at the time when the mineral water or juices have been drunk up, includes a step of molding of the bottle so that the bottle has a predetermined volume and height, the bottle being constructed so that a longitudinal part or the whole of the bottle, except a mouth portion at the upper end, has a bellows shape in the horizontal direction.

Advantageously, the above-described process includes a step of compression molding of the bottle so that the molded bottle is compressed in the longitudinal direction so that the volume is decreased significantly as compared with the predetermined volume and the height is decreased significantly, and the compressed state is kept at ordinary temperature.

Advantageously, the above-described process includes a step of transporting of the compressed bottle to a plant, where the bottle is filled with mineral water or juices, while the compressed state is kept.

Advantageously, the above-described process includes a step of expanding of the bottle so that the bottle again has the same volume and height as the original ones at the time of air blowing, sterilizing, cleaning, or charging of mineral water or juices in a charging plant.

Advantageously, the above-described process includes a step of transporting of the bottle that is filled with mineral water or juices and has the predetermined volume and height to a wholesaler or a retailer.

Generally, a feature of the preferred embodiments of the present invention is to provide a distribution system for plastic bottles in which when the plastic bottle filled with mineral water or juices is procured and drunk, the volume and height of bottle can be decreased so as to correspond to an empty portion, and after the contents of bottle has been drunk up, the bottle is compressed in the longitudinal direction by collapsing, and the bottle can be thrown away in a state in which the volume thereof is far smaller than the predetermined volume and the height thereof is very small.

The configuration in which the whole shape of the bottle in accordance with the present invention is selected appropriately from a circular cylinder including an elliptical one, a prism including a quadrangular one, a circular cone and a pyramid including truncated ones, a hourglass drum shape, and a barrel shape, the configuration in which the horizontally sectional shape of the bottle is appropriately selected from a circle including an ellipse and a quadrangle including a rectangle, and the configuration in which the invention can be applied to manufacturing means for a bottle with a label, on which contents of bottle, a trademark, and the like are printed, put at the outer periphery thereof are thought to be within the technical scope of the present invention.

Embodiments of the invention are now described with reference to the drawings in which:
FIG. 1 is an explanatory view of a distribution process from manufacture to throw-away of a bottle;
FIG. 2 is a front view showing the whole of a bottle in accordance with an embodiment;
FIG. 3 is a front view of the bottle shown in FIG. 2 in a collapsed state;
FIG. 4 is an enlarged sectional view of a bellows portion of the bottle shown in FIG. 2;
FIG. 5 is an enlarged sectional view of a shoulder portion of the bottle shown in FIG. 2;
FIG. 6 is a sectional explanatory view showing the whole of a mold;
FIG. 7 is a sectional explanatory view of a compression molding mechanism, showing a state before the bottle is collapsed;

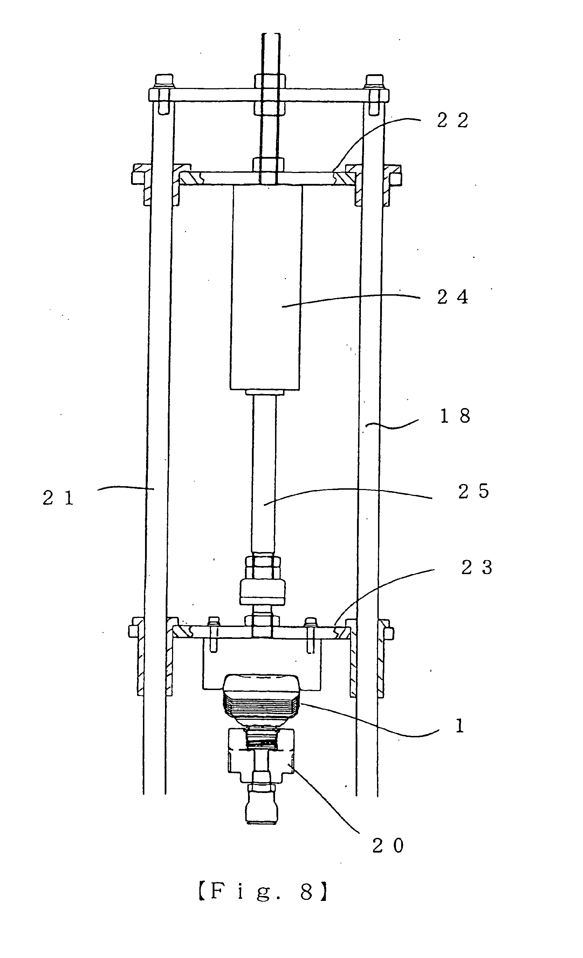

FIG. 8 is a sectional explanatory view showing a state of the bottle after being collapsed;
FIG. 9 is a piping diagram for a compression molding mechanism;
FIG. 10 is a sectional explanatory view showing a state in which the bottle is being collapsed;
FIG. 11 is a sectional explanatory view of a bellows portion of the bottle;
FIG. 12 is a sectional explanatory view of a bottom portion of the bottle;
FIG. 13 is a front explanatory view of an expanding mechanism for expanding a compressed bottle; and
FIG. 14 is a piping diagram for the expanding mechanism.

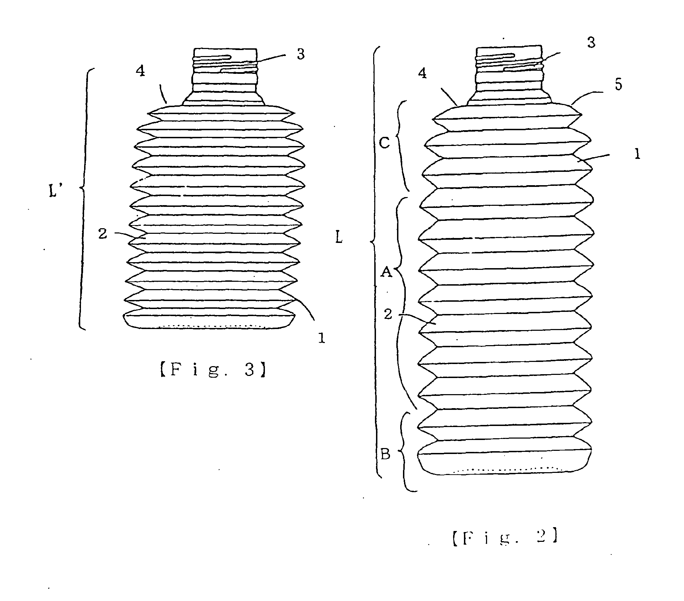

In FIG. 2, reference numeral 1 denotes a bottle obtained by a manufacturing method in accordance with the present invention. The bottle 1 shown in FIG. 2 is in a state of being removed from a mold 16 for molding the bottle 1, that is, in a state in which a volume (height) (L) thereof is equivalent to a volume (height) in a case where the bottle 1 is filled with contents as seen in FIG. 2.

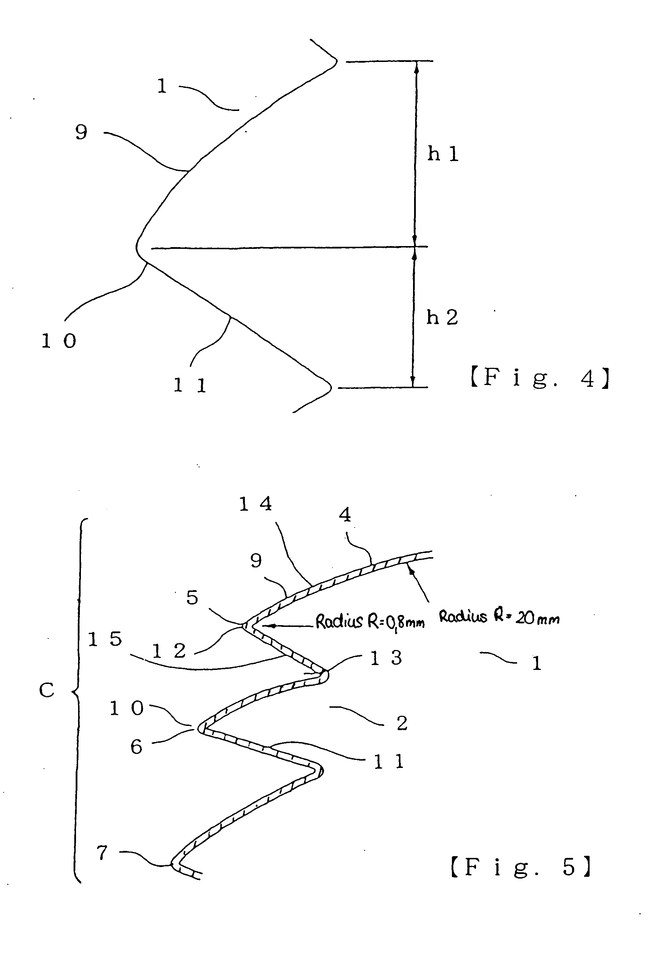

The bottle 1 shown in FIG. 3 is in a state after the bottle 1 has been molded by a compression molding mechanism 18 which compresses the bottle 1 in the longitudinal direction, that is, in a state in which the bottle 1 has a height (L)' in an empty state. The height of the bottle 1 can usually be contracted to 1/2 to 1/10 of the height (L).

An embodiment of the present invention will now be described with reference to the accompanying drawings. First, the construction of the bottle 1 itself, operation, and effects of the present invention are explained because this explanation leads to easy understanding of the features of the present invention.

The bottle 1 shown in FIG. 2 is in a state of being removed from a mold, and the outer periphery and inner periphery in the direction of height (L) [length] excluding a mouth portion on the top have a bellows portion 2. At this time, the height (L) of the bottle 1 corresponds to a volume of 500 m/ml at the time when the bottle 1 is filled with contents.

More specifically, the bottle 1 shown in FIG. 2 has a height of 195 mm, a maximum diameter of 71.5 mm, and a volume of 500 m/ml, and has a shape having 12 folds of the bellows portion 2.

In FIG. 2, reference numeral 3 denotes a mouth portion for drinking, and 4 denotes a back portion ranging from the mouth portion 3 to a first bellows portion 5. In this embodiment, the outside diameter of the first bellows portion 5 is 67.9 mm, and the outside diameter of a second bellows portion 6 is 69.7 mm. A distance between the first bellows portion 5 and the second bellows portion 6 is 14 mm.

Similarly, the outside diameter of a third bellows portion 7 is 71.5 mm, and the diameter of a portion between the second bellows portion 6 and the third bellows portion 7 is 54.5 mm.

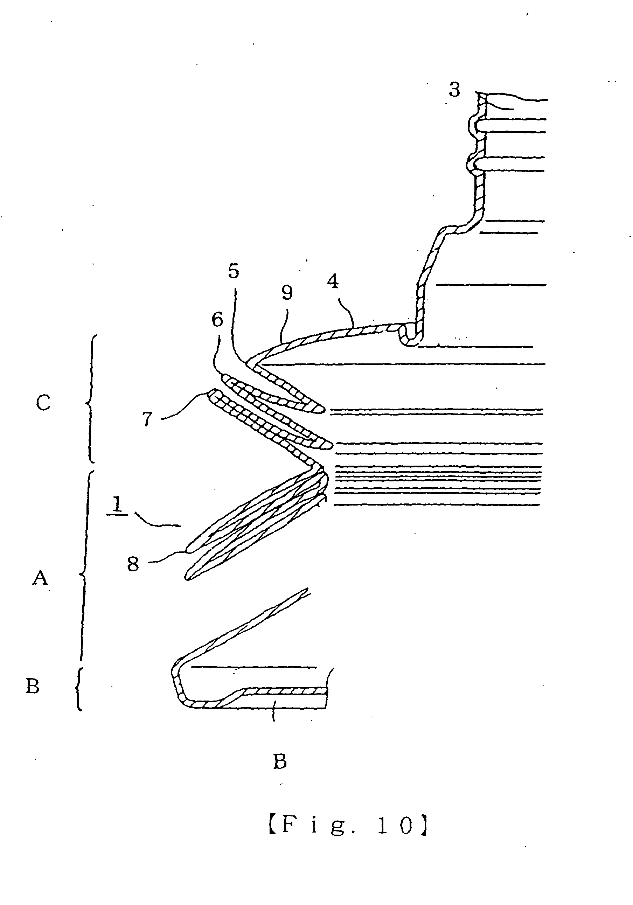

Further, in FIG. 10, the outside diameter of a fourth bellows portion 8 is 71.5 mm, which is the same as the outside diameter of the third bellows portion 7, the maximum outside diameter of the bottle 1, and the diameter of a portion between the third bellows portion 7 and the fourth bellows portion 8 is similarly 54.5 mm.

The outside diameters of fifth to twelfth bellows portions are the same as the outside diameter of the fourth bellows portion 8, and the diameters of portions between these bellows portions are the same as the diameter of a portion between the third bellows portion 7 and the fourth bellows portion 8.

In this case, each fold has a shape like an unidentified flying object (UFO) called an Adamski type, and therefore is divided into upper and lower parts with respect to the horizontal direction.

Referring to FIG. 4, the heights of an upper part h1 and a lower part h2 of the fold of the first bellows portion 5 are 5.5 mm and 5.0 mm, respectively, those of the fold of the second bellows portion 6 are 8.5 mm and 6 mm, respectively, and those of the fold of the third bellows portion 7 are 8.5 mm and 6.5 mm, respectively.

More specifically, in an example of dimensions of folds of the first bellows portion 5 to the third bellows portion 7 in FIG. 4, it is an important point that an upper surface 14 of the UFO shape has a curved shape 9 having a radius R of 20 mm protruding outward in this embodiment, and contrarily a lower surface 15 thereof has a straight shape 11 via a protruding arcuate shape 10 of having a radius R of 0,8 mm.

The construction of this embodiment is explained together with the operation thereof. The bottle 1 in the state shown in FIG. 2 is divided into three portions: a cylinder portion A including a central portion and a lower portion, a bottom portion B, and a shoulder portion C as shown in FIG. 10. The portions A and C have two diameters, larger and small, so that the bottle 1 keeps a stable vertical state.

Specifically, the cylinder portion A including the central portion and lower portion are formed folds having the same inside and outside diameters, and the shoulder portion C is apparently curved in a convex shape of gentle inclination toward the mouth portion 3. In particular, in the shoulder portion C, as shown in FIG. 5, the outside diameters of a peak 12 and a valley 13 forming the fold are decreased gradually toward the mouth portion 3 in the range from the central portion to the mouth portion 3, and the inclination angle thereof has a larger difference than the cylinder portion A. Therefore, in a state in which the central portion is expanded, the inside diameter and inclination angle of the peak 12 and the valley 13 forming the fold can keep a state in which the height is contracted because of the strength and elastic force of material even when drinking operation is stopped during the time when the contents are drunk, and the bottle 1 is compressed in the longitudinal direction to collapse the empty portion.

This means that the shoulder portion C and the cylinder portion A of the bottle 1 press the folds of the shoulder portion C that may be contracted by the restoring force thereof, and the end surface of the valley 13 compresses the valley end surface of the fold located adjacently in the vertical direction.

In a state viewed from the apex of the peak 12 of fold at this time, the compressed state corresponds to a state in which the valleys 13 on both sides are pushed toward the apex of this peak 12. At this time, the compression component on a gentle inclination side of the upper surface 14 of fold is larger than the compression component on a sharp inclination side of the lower surface 15 because the inclination of the former compression component is smaller than the inclination of the latter compression component. Therefore, the valley 13 on the sharp inclination side moves toward the apex of the peak 12.

It can be thought that the bottle 1 undergoes two large changes at this time.

A first change is such that the inside diameter of the peak 12 forming the fold is increased by an expansion pressure, or the inside diameter of the valley 13 is decreased by a contraction pressure, and a second change is such that a sharp inclination surface of the lower surface 15 forming the fold is bent.

Subsequently, the sharp inclination surface passes just under the peak 12, and further slips into the inside of the gentle inclination side of the upper surface 14. When the height of the bottle 1 is decreased to the contracted state, a force for restoring the inside diameter of the peak 12 and the inside diameter of the valley 13 acts, or the bent state of the lower surface 15 formed by the above operation is restored to an expanded state, by which a stable state is formed.

Therefore, the contracted state can be kept even if a compressive force is not always applied.

For the valley 13 having a small inside diameter, the inside diameter thereof is further decreased under a contraction pressure, and a compressive stress is generated.

When the contraction pressure is removed, the stress acts so as to be released, and the expanded state is restored.

Therefore, the bottle 1 keeps the contracted state at atmospheric pressure, and when no compressive stress is generated by a difference in inside diameter of the valley 13, the contracted state is kept.

As a result of many experiments, the height (volume) of the bottle 1 could be decreased to less than 1/2 to 1/10. Therefore, the contracted bottle could be transported in large quantities at one time, and even if the bottle 1 was thrown away in a trash container after the contents had been drunk up, the space for throwing away the bottle 1 could be decreased significantly.

The following is a description of an example of a mold suitable for mass production of the bottle 1 in accordance with the present invention.

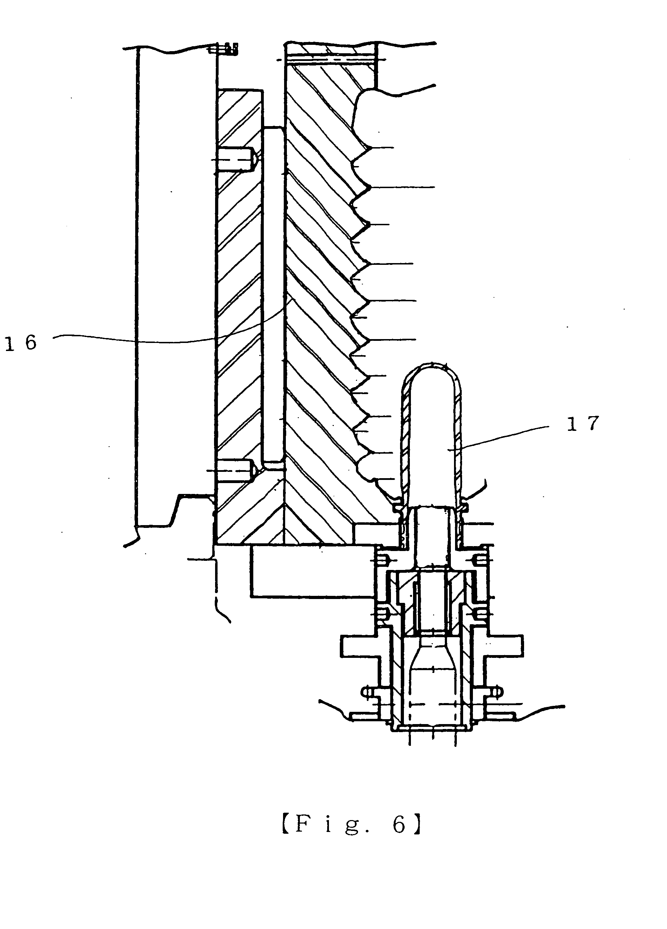

In FIG. 6, reference numeral 16 denotes a two-piece mold for manufacturing the cylindrical bottle 1 shown in FIG. 2. A preform 17 can be inserted through the bottom surface of the mold 16.

Explanation is given of a process for manufacturing the bottle 1 using the mold 16 in this example. First, the mold 16 is in an opened state.

In this state, the preform 17 is automatically inserted into the mold 16 from the downside. Then, after the preform 17 has been heated uniformly, high-pressure air of about 40 kilograms is sent into the preform 17 to expand the preform 17, by which the bottle 1 is formed.

The bottle 1 thus obtained has a height approximately equal to that at the time when the bottle 1 is filled with contents such as juice.

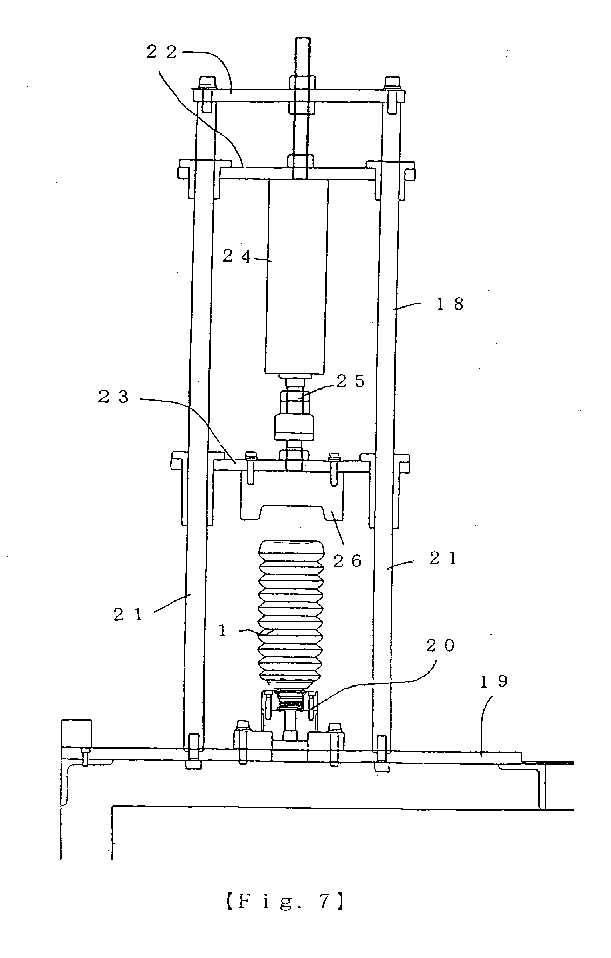

In FIG. 7, reference numeral 18 denotes a mechanism for compression molding the bottle 1, and 19 denotes a horizontal bed. In a central portion of the bed 19, although the details are not shown, a chuck mechanism 20 having an appropriate construction is provided. The mouth portion 3 of the bottle 1 is chucked by the chuck mechanism 20 so that the bottle 1 can surely be held in a reversed vertical state.

Reference numeral 21 denotes a pair of pillars erected on both sides of the chuck mechanism 20. In the intermediate portion and the top end portion of the pillars 21, upper and lower support rods 22 and 23 are provided to bridge the pillars 21. Reference numeral 24 denotes a cylinder fixed vertically between the support rods 22 and 23. A piston rod 25 of the cylinder 24 penetrates the lower support rod 23, and at the lower end thereof, a pressing member 26 is provided which engages slightly with the bottom portion B of the bottle 1 to press the bottom portion B of the bottle 1 toward the mouth portion 3.

A fluid supplied to the cylinder 24 may be any appropriate fluid such as air or oil. Means for supplying the fluid may be selected from publicly known means.

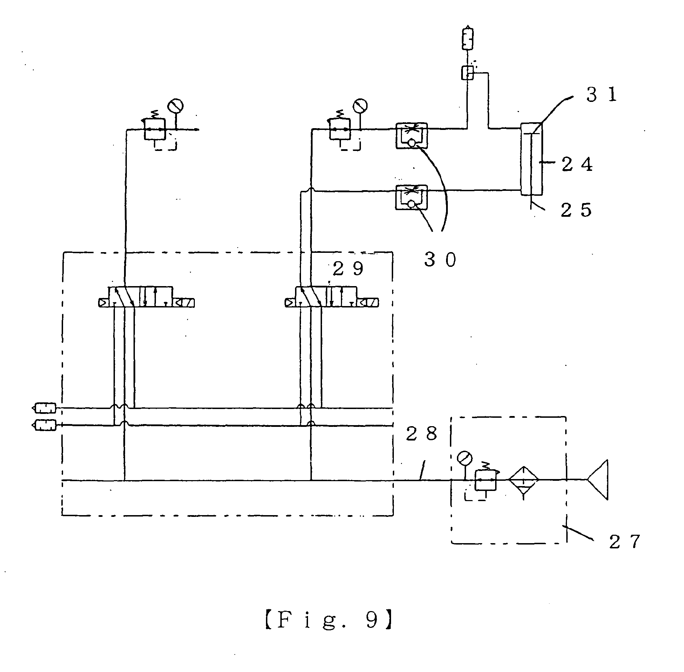

For example, in FIG. 9, reference numeral 27 denotes a pressure source. The output of the pressure source 27 is sent to portions above and below a piston upper part 31 in the cylinder 24 via piping 28, a three port connection valve 29, and an appropriate shutoff valve 30.

The bottle 1 removed from the mold 16 is set on the chuck mechanism 20 of the compression molding mechanism 18.

Next, an appropriate fluid is sent to the portion above the piston upper part 31 in the cylinder 24 from the pressure source 27 via the piping 28. As a result, the piston upper part 31 and the piston rod 25 lower, and the pressing member 26 at the lower end of the piston rod 25 comes into contact with the bottom portion B of the bottle 1, by which the bottle 1 is compressed.

The height of the bottle 1 having a small volume (height), which has been obtained as described above, is contracted to about 1/2 to 1/10 of the original height.

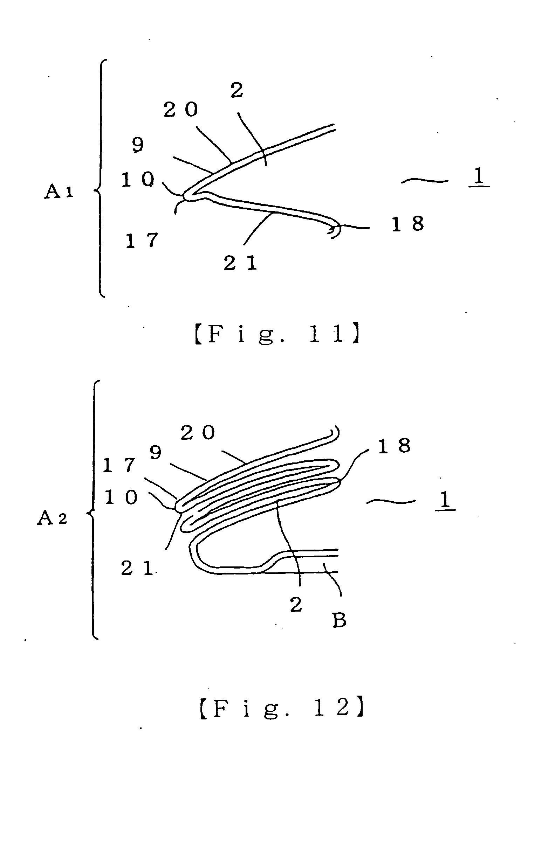

As shown in FIGS. 10 to 12, the cylinder portion A including the upper portion and the lower portion of the bottle 1 in this state becomes in a state in which the shoulder portion C and the cylinder portion A are compressed and contracted. Specifically, the folds in the shoulder portion C are pressed from a state of the bottle 1 which is removed from the mold 16 as shown in FIGS. 4 and 5, and the end surface of the valley 13 compresses the valley end surface of the fold located adjacently in the vertical direction.

In a state viewed from the apex of the peak 12 of fold at this time, the compressed state corresponds to a state in which the valleys 13 on both sides are pushed toward the apex of this peak 12. At this time, the compression component on the gentle inclination side of the upper surface 14 of fold is larger than the compression component on the sharp inclination side of the lower surface 15, and therefore the valley 13 on the sharp inclination side moves toward the apex of the peak 12 as described above. Thereupon, in the collapsed bottle 1, a sphere cut shape and the curved shape 9 which form an upper inclination portion of fold in the back portion 4 "balance" with a lower inclination portion of fold in the cylinder portion A, so that the bottle 1 can be kept in the collapsed state without a cap being put.

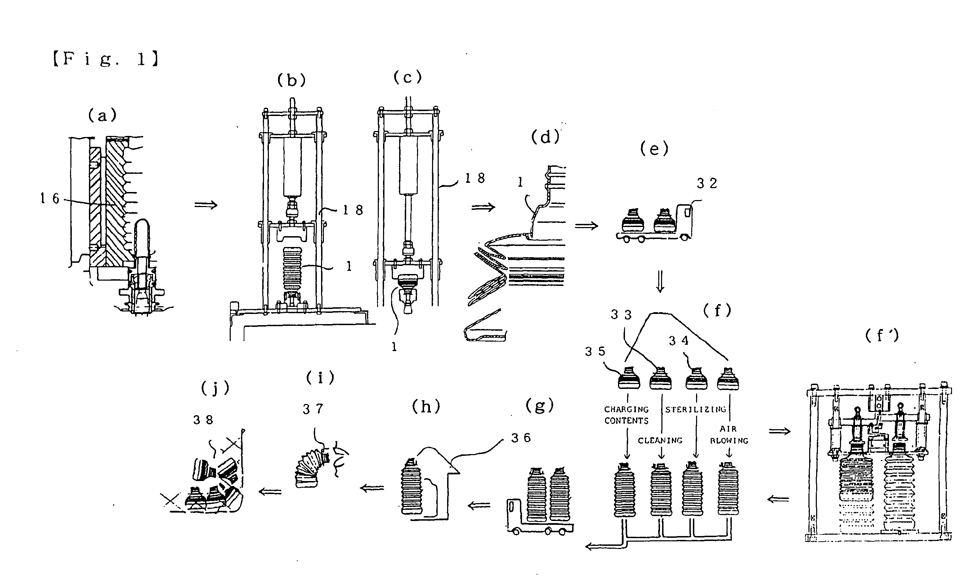

FIG. 1 shows a usual distribution process from manufacture to throw-away of the plastic bottle in accordance with the present invention.

I of FIG. 1 denotes means for manufacturing the bottle 1 in accordance with the present invention as described above, in which the bottle 1 is molded using the mold 16. In this case, the height (volume) is (L) which is the same height as that at the time when the bottle 1 is filled with contents. Next, the bottle 1 is transferred to the compression molding mechanism 18 installed usually in the same plant. The height of the bottle I shown in II is contracted in the longitudinal direction as shown in III. Thereby, the bottle (height) can be contracted significantly as described above as shown in IV, so that in transportation 32 of the bottle, the quantity of transportation can be increased dramatically as compared with the conventional bottle, and the contracted state can be kept during the transportation 32 as described above.

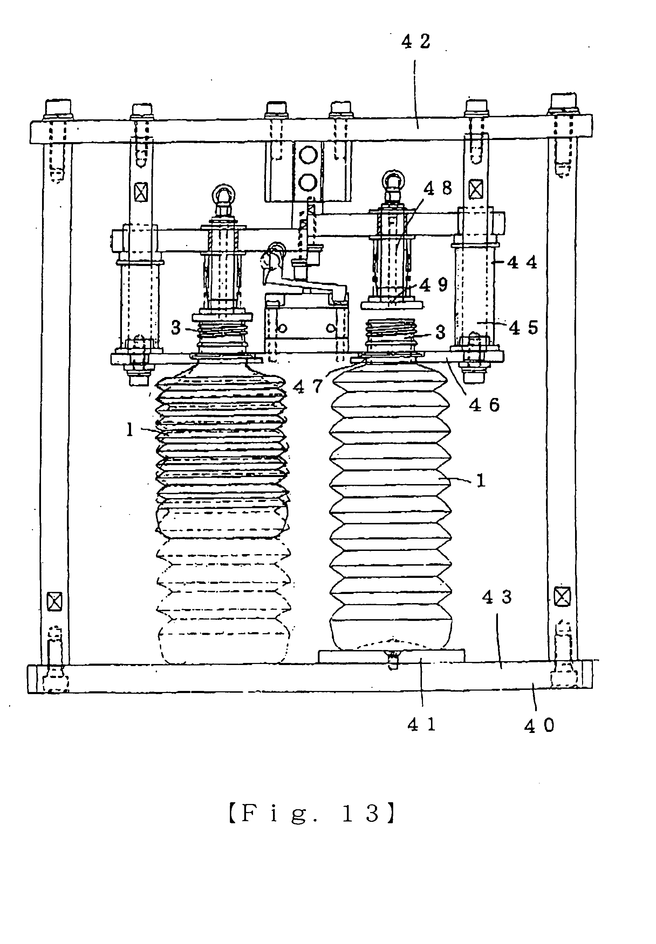

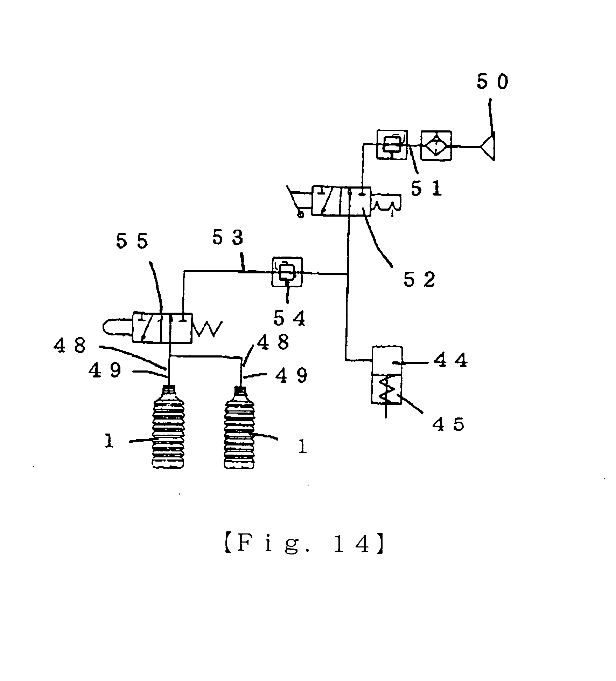

Next, the contracted bottle 1 is transported to a plant VI where contents such as juice or mineral water are charged. To charge the contents, the bottle 1 is expanded so as to have the original height (volume) generally in the plant VI (VI'), and an expanding mechanism is, for example, as shown in FIGS. 13 and 14.

This expanding mechanism is a mechanism for expanding the compressed bottle 1 to the original state. Reference numeral 40 denotes a square-shaped frame, and the bottle 1 is mounted on the frame 40 in a vertical state.

In this case, as shown in the figure, a mount 41 for raising the bottle 1 may be provided according to the size (height) of the bottle 1. 0057

Reference numeral 44 denotes a cylinder provided so as to project from an upper beam 42 of the frame 40 toward a lower beam 43 thereof. At the lower end of a piston rod 45 in the cylinder 44, a fork element 46 is provided in the horizontal direction. The lower side of the fork element 46 can be engaged with a collar portion 47 of the mouth portion of the bottle 1.

Also, reference numeral 48 denotes a nozzle having an air blowing port 49 located above the bottle 1 mounted on the frame 40. The nozzle 49 is fixed at an appropriate position of the frame 40.

Fluids supplied to the cylinder 44 and the nozzle 48 may be any appropriate fluid such as air or oil. Means for supplying the fluids may be selected from publicly known means.

For example, in FIG. 14, reference numeral 50 denotes a pressure source. The output of the pressure source 50 is sent to an upper portion of the piston rod 45 in the cylinder 44 via piping 51 and a three port connection valve 52.

A fluid having passed through elements such as piping 53 and a check valve 54 is supplied to the nozzle 48 via a three port connection valve 55, and is sprayed through the blowing port 49. FIG. 13 shows a state in which two compressed bottles 1 are arranged and expanded at the same time.

The bottle 1 having been transported in the compressed state is set on the frame 40 of the expanding mechanism. Then, an appropriate fluid is sent to the upper portion of the piston rod 45 in the cylinder 44 via the piping 51 from the pressure source 50. As a result, the piston rod 45 lowers, and the fork element 46 at the lower end is engaged with the collar portion 47 of the mouth portion 3 of the bottle 1 so that the bottle 1 is as if the bottle 1 is hung. In order to hang the compressed bottle 1 indicated by dotted line on the left-hand side of FIG. 13, the piston rod 45 is lowered as shown, and at the same time, not shown the fork element 46 is moved laterally so as to engage with the collar portion 47 of the mouth portion 3 of the bottle 1. Alternatively, the fork element 46 is fixed, and the collar portion 47 of the mouth portion 3 of the bottle 1 is manually engaged with the fixed fork element 46.

Although detailed illustration or detailed explanation is omitted, differing depending on the environment of charging plant, the kind of charged contents, and the country's laws and regulations, in many cases, cleaning 33 of the interior of the bottle 1 and subsequent or simultaneous sterilizing 34 are accomplished, or when these jobs have been finished as separate jobs, simply air is sent under pressure into the bottle 1 or charging 35 of contents is accomplished. At this time, the height (volume) of the bottle 1 is returned to the original one, and in this state, a cap or a label is put, and transportation VII is accomplished.

VIII of FIG. 1 denotes a bottle 1 displayed in a store. The purchaser can curve the bottle 1 in the height direction during drinking IX. Therefore, juice etc. can be drunk without spilling even when it is drunk, for example, while the purchaser lies down on the seashore. Even during drinking 37, an empty portion of the bottle 1 can be compressed to decrease the volume (height) of the bottle 1. Thereby, even the bottle 1 from which some of contents has been drunk can easily be thrust into a pocketbook and can be carried.

After all contents have been drunk up, the empty bottle 1 is collapsed from the upside or downside direction or both directions to reduce the volume of bottle to about 1/2 to 1/10 (38), and is thrown away in a trash container 39, etc. Thereby, the quantity of bottles contained in the trash container can be increased greatly. Also, in the recovery work, the quantity of recovered bottles can be increased significantly.

Therefore, the quantity of collapsed bottles or refuse including the bottles which is transported to a treatment plant or recycling plant can be increased significantly as compared with the conventional example.

## Claims

1. A method for manufacturing a longitudinally expandable plastic bottle, comprising a step of molding of said bottle constructed so that a longitudinal part or the whole of said bottle, except a mouth portion at the upper end, has a bellows shape in the horizontal direction;
a step of compression molding of said bottle so that the molded bottle is compressed in the longitudinal direction and the compressed state is kept at ordinary temperature; and
a step of expanding of said bottle so that said bottle is expanded from the compressed state so as to have almost the same height (volume) as the original height.

2. The method according to claim 1, wherein in forming the bellows shape of said bottle, said bellows shape has an upper side having an arcuate shape protruding upward and a lower side having a straight shape.

3. The method according to claim 1 or 2, wherein in the step of molding of said bottle, a preform is automatically fed into a mold, and the bellows shaped bottle is molded with a high-pressure air of about 40 kilogram.

4. The method according to claim 1 or 2, wherein in the step of compression molding of said bottle, when the molded bottle is compressed in the longitudinal direction to collapse a bellows shaped portion of said bottle from one side or both sides in the lengthwise direction toward the center of said bottle, a state in which said bellows shaped portion is collapsed in a lapped manner can be kept.

5. The method according to any of the claims 1 to 4, wherein said step of expanding of said bottle is performed by gripping said mouth portion of the bottle and by pulling up said mouth portion while a fluid is supplied into said bottle.

6. A longitudinally expandable plastic bottle being constructed so that a longitudinal part or the whole of said bottle, except a mouth portion at the upper end, has a bellows shape in the horizontal direction, wherein the bellows shape of said bottle has an upper side having an arcuate shape protruding upward and a lower side having a straight shape.

7. An apparatus for manufacturing a longitudinally expandable plastic bottle, comprising a mold for molding said bottle constructed so that a longitudinal part or the whole of said bottle, except a mouth portion at the upper end, has a bellows shape in the horizontal direction;
a compression molding mechanism for compressing the molded bottle in the longitudinal direction; and
an expanding mechanism for expanding said bottle in the longitudinal direction from the compressed state so as to have almost the same height (volume) as the original height.

8. The apparatus according to claim 7, wherein said mold for molding said bottle has a mold portion for forming said bellows shape having an upper side having an arcuate shape protruding upward and a lower side having a straight shape.

9. The apparatus according to claim 7 or 8, wherein said compression molding mechanism comprises a mechanism for placing the bellows shaped bottle in the longitudinal direction and a mechanism for compressing said bottle in the longitudinal direction.

10. The apparatus according to claim 7 or 9, wherein said mechanism for placing the bellows shaped bottle in the longitudinal direction is provided, on the apparatus body, with a mechanism for chucking said mouth portion with the mouth portion of the bottle downward.

11. The apparatus according to claim 7 or 9, wherein said mechanism for compressing said bottle in the longitudinal direction in said compression molding mechanism for said bottle is constructed so that said bottle is pressed from a bottom portion of said bottle toward the mouth portion by a piston and cylinder mechanism which is operated by a fluid pressure and is provided on the apparatus body.

12. The apparatus according to any of the claims 7 to 11, wherein said expanding mechanism comprises a mechanism for placing said bellows shaped bottle in the longitudinal direction; a mechanism for gripping said mouth portion of the bottle; and a mechanism for sending a fluid into said bottle.
